# EUROPEAN PATENT SPECIFICATION

(11) **EP 1 121 017 B1**
(45) Date of publication and mention of the grant of the patent: **07.08.2002**
(21) Application number: 99970570.0
(22) Date of filing: 01.10.1999
(51) Int. Cl.: A01N 47/36, C02F 1/50

(54) **A METHOD FOR REDUCING AMINO ACID BIOSYNTHESIS INHIBITING EFFECTS OF A SULFONYL-UREA BASED COMPOUND**
VERFAHREN ZUR REDUZIERUNG VON DIE AMINOSÄURENBIOSYNTHESE INHIBIERENDEN EFFEKTEN EINER AUF SULPHONYLHARNSTOFF BASIERENDEN VERBINDUNG
PROCEDE DE REDUCTION DES EFFETS INHIBANT LA BIOSYNTHESE DES ACIDES AMINES D'UN COMPOSE A BASE DE SULFONYLUREE

(30) Priority: 15.10.1998 DK 981325
(43) Date of publication of application: 08.08.2001
(73) Proprietor: Novozymes A/S, 2880 Bagsvaerd (DK)
(72) Inventor: KIRK, Ole, DK-2880 Bagsvard (DK); OHMANN, Anders, DK-2880 Bagsvard (DK)
(86) International application number: DK9900520
(87) International publication number: WO0022928

(56) References cited:
- WO-A1-94/23857
- WO-A1-97/19176

## Description

### TECHNICAL FIELD

The present invention relates to a method for enzymatic treatment of sulfonyl-urea based compounds. More specifically the invention relates to a method, wherein an enzyme is employed to treat sulfonyl-urea based compounds, which are highly potent inhibitors of biosynthesis of amino acids in various organisms, and which may be used as powerful herbicides, pesticides or as drugs. Even more specifically the invention relates to a method for reducing the amino acid biosynthesis inhibiting effect of sulfonyl-urea based compounds to prevent unintended contamination of biological material sensitive to such compounds by devices used at both sensitive and insensitive biological material.

### BACKGROUND ART

Sulfonyl-urea based compounds are known to the art as powerful inhibitors of amino acid biosynthesis, which thus may be used to inhibit the proliferation of cells or organisms or even kill them. In the agricultural and horticultural area sulfonyl-urea based compounds, such as Tribenuron™ and Metsulforon™ are, *inter alia,* known as highly potent herbicides. Although the high amino acid biosynthesis inhibiting effect of these compounds allows for a desired general reduction in the load on the locus to which it is administered, these compounds may however by nature be harmful to other biological entities if contaminated.

The high amino acid biosynthesis inhibiting effect of sulfonyl-urea based compounds makes it critical to avoid that even trace amounts of the active compounds contaminate biological material where the compounds may have a harmful effect. Thus it is highly desired to reduce the risk of contamination, by reducing amino acid biosynthesis inhibiting effect of remaining amounts of sulfonyl-urea based compounds present e.g. in devices which is used both to administer these compounds to the intended biological locus and to loci where even trace amounts of the sulfonyl-urea based compounds have a harmful effect.

### SUMMARY OF THE INVENTION

We have found that the amino acid biosynthesis inhibiting effect of sulfonyl-urea based compounds may be reduced or even eliminated by treating these compounds with an enzyme. Accordingly we have found a method for reducing amino acid biosynthesis inhibiting effect of a sulfonyl-urea based compound of the general formula: 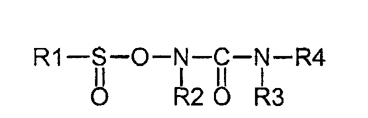 comprising contacting in an aqueous solution said sulfonyl-urea based compound with an enzyme.

### DETAILED DISCLOSURE OF THE INVENTION

### Definitions

The amino acid biosynthesis inhibiting effect as used herein in accordance with the invention is to be construed as the amount of compound calculated in an unambiguous unit such as concentration or moles required to obtain a predefined effect in a process, to which the compound is applied. Accordingly a compound which has a high amino acid biosynthesis inhibiting effect in a predefined process will require less concentration or amount of the compound than a compound with less amino acid biosynthesis inhibiting effect to obtain the same effect. Amino acid biosynthesis inhibiting effect may be evaluated as an absolute property of a compound by measuring the absolute effects of the compound in a process at predefined conditions or it may be evaluated as a relative property of a compound, whereby the effect of the compound is measured in a process and compared to a reference compound measured in the same process. As an example, the compound may be a herbicide and the process may be the killing or growth inhibition of a specific herb in a field. The amino acid biosynthesis inhibiting effect of a compound may thus be evaluated by spraying half the field with a solution of the compound in a specific ratio (e.g. liters per square acre) and the other half with an equally concentrated solution of a reference herbicide. The amino acid biosynthesis inhibiting effect of the compound may then be evaluated as the number of herbal plants killed or growth inhibited by the compound compared to the number of herbal plants killed or growth inhibited by the reference herbicide in each half of the field.

### The enzyme

The enzyme nomenclature used herein is based on the recommendations of the Nomenclature Committee of the International Union of Biochemistry and Molecular Biology (IUBMB) which describes types of characterized enzymes with an EC (Enzyme Commission) number.

Enzymes suitable to be employed in the method of the invention may in principle be any enzyme which is able of reducing the amino acid biosynthesis inhibiting effect of a sulfonyl-urea based compound. Preferably the enzyme has been industrially produced by fermentation, by *in vitro* synthesis or by extraction from plant or animal tissue, and more preferably the enzyme has been isolated or purified by methods known to the art. A variety of enzyme types may provide a reduction in amino acid biosynthesis inhibiting effect, each in different ways.

Preferred enzymes are hydrolases within the enzyme class of EC 3.-.-.-, such as enzymes from the subclasses: esterases (EC 3.1.-.-), peptidases (EC 3.4.-.-), hydrolases acting on carbon-nitrogen bonds other than peptide bonds (EC 3.5.-.-) and sulfohydrolases (EC 3.10.-.-).

Among esterases suitable enzymes are carboxylic ester hydrolases (EC 3.1.1.-), such as carboxyl esterase (EC 3.1.1.1) and lipase (EC 3.1.1.3), or sulphatases (EC 3.1.6.-), while suitable hydrolases acting on carbon-nitrogen bonds other than peptide bonds are amidases (EC 3.5.1.4) and ureases (EC 3.5.1.5) such as urease obtained from Jack beans, e.g. Sigma (art. no. U 2125).

The enzyme used in the method of the invention may be synthesized *in vitro* or it may preferably be obtained by culturing a microorganism expressing the mature or immature enzyme in a suitable medium and recovering the enzyme by methods known to the art. The enzymes may be obtainable from a variety of microbial sources, notably bacteria and fungi (including filamentous fungi and yeasts). The enzymes may even more preferably be obtained by
- isolating a DNA sequence encoding the desired enzyme from a microbial source,
- inserting said DNA sequence in a functional expression vector by recombinant techniques known to the art,
- Inserting the functional expression vector in a microbial host cell (e.g. by transformation),
- Culturing the transformed host cell in a medium suitable for expression of the enzyme.
- Recovery and formulation of the enzyme.

The fermentation broth or enzyme solution or concentrates thereof may be further processed to obtain 1) a stable liquid composition by addition of conventional stabilizers, 2) a slurry composition or 3) a composition with the enzyme in a protected form. Protected enzymes may be prepared according to the method disclosed in EP-A-238,216.

Solid enzyme preparations or composition may be prepared from the broth or enzyme solution or concentrates thereof broth by precipitation with salts, such as Na₂SO₄ or water-miscible solvents, such as ethanol or acetone. Removal of the water in the broth by suitable drying methods, such as spray-drying, may also be employed. A preferred solid enzyme composition is a granulate, most preferred a dust free granulate. Dust free granulates may be produced, e.g. as disclosed in US 4,106,991 and US 4,661,452 and may optionally be coated by methods known to the art.

### The sulfonyl-urea based compound

The sulfonyl-urea based compounds are of the general formula: 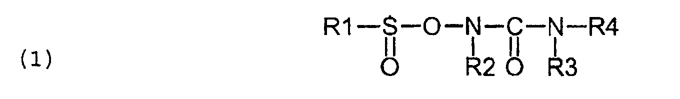 where R1 and R4 may be selected from the group of residues consisting of C₁₋₁₈-alkyl, monocyclic aromatic, dicyclic aromatic, polycyclic aromatic and heteroaromatic, while R2 and R3 substituent may be selected from the group consisting of hydrogen, methyl, ethyl and butyl. In a preferred embodiment R1 is a mono-aromatic group and R4 is a heteroaromatic group, e.g. R1 may be a phenyl group and R4 may be selected from the group consisting of pyridine, pyrazine, pyridazine, pyrimidine and triazine. Thus the a preferred sulfonyl-urea based compound may be of the formula: 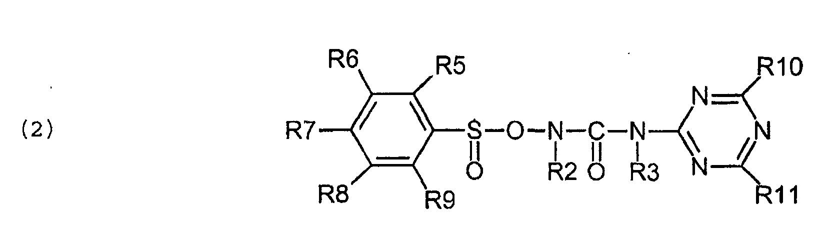 Said R1 and R4 substituents may further be substituted with substituents selected from the group consisting of halogen, sulfo, sulfonato, sulfamino, sulfanyl, amino, amido, nitro, azo, imino, carboxy, cyano, formyl, hydroxy, halocarbonyl, carbamoyl, carbamidoyl, phosphonato, phosphonyl, C₁₋₁₈-alkyl, C₁₋₁₈-alkenyl, C₁₋₁₈-alkynyl, C₁₋₁₈-alkoxy, C₁₋₁₈-oxycarbonyl, C₁₋₁₈-oxoalkyl, C₁₋₁₈-alkyl sulfanyl, C₁₋₁₈-alkyl sulfonyl and C₁₋₁₈-alkyl imino or amino which is substituted with one, two or three C₁₋₁₈-alkyl groups. Accordingly the sulfonyl-urea based compound may preferably be selected from the group consisting of 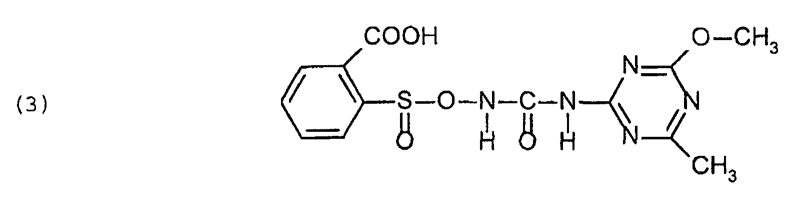 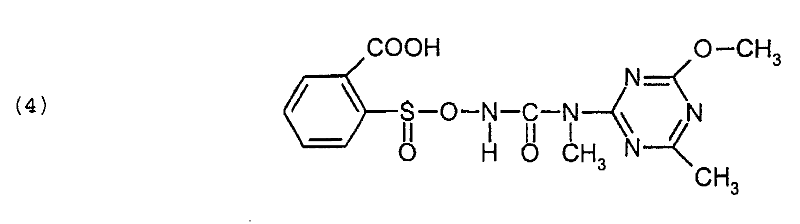 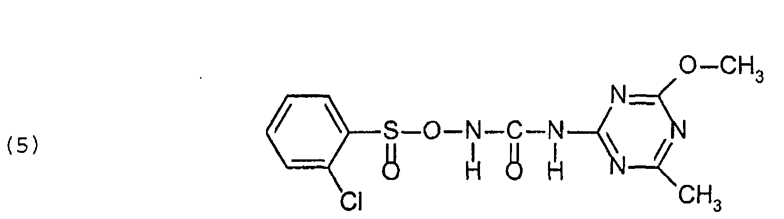 and

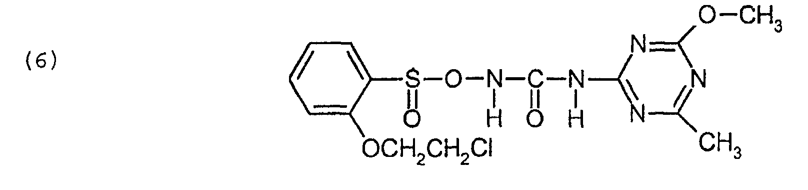

Further preferred sulfonyl-urea based compounds are biocides such as a herbicide, pesticide, fungicide or bactericide and preferably acts as amino acid biosynthesis inhibitors.

### Applications

The method of the invention comprises as said contacting in an aqueous solution the sulfonyl-urea based compound with an enzyme capable of reducing the amino acid biosynthesis inhibiting effect of the sulfonyl-urea based compound. Typically the reduction of amino acid biosynthesis inhibiting effect may be obtained from contact with a hydrolase enzyme which will result from a hydrolytic degradation or digestion of the sulfonyl-urea based compound.

The method may suitably be used to clean devices used for handling the compounds, which devices are also used for purposes where the presence of sulfonyl-urea based compounds is highly undesirable. Such devices may e.g. be agricultural or horticultural crop spraying devices used both to spray plants, which is insensible to sulfonyl-urea based compounds and plants which is sensible to sulfonyl-urea based compounds. The method may also be used to avoid general environmental contamination by treating e.g. left overs of spraying solutions comprising sulfonyl-urea based compounds, and waste waters used to clean or flush the spraying device. Accordingly the invention provides a method for cleaning a spraying device or a waste water containing sulfonyl-urea based compounds by contacting the spraying devices or waste water with an enzyme.

### MATERIALS AND METHODS

All chemicals should be of analytical grade and may be obtained from Merck (Darmstadt, Germany). Chlorsulfuron (1-(2-chlorophenylsulfonyl)-3-(4-methoxy-6-methyl-1,3,5-triazin-2-yl)urea) is available from E.I. du Pont de Nemours & Co. (Inc.) under the trademarks Glean and Telar.

As a method of measuring the Glean and Telar and the degradation products upon treatment with enzyme, HPLC is performed using a LC-6A HPLC system (Shimadzu, Japan) with UV-detection (280 nm), employing a gradient of acetonitrile in water (20 - 80 % over 25 min.) and a LiChrosorb RP-18 (10 µm) reversed phase column (250 x 4.6 mm I.D.).

A second assay for detecting levels of sulfonyl-urea based compounds in samples was developed in which 2.25 mg chorsulfuron was dissolved in a 1500 µl BR buffer pH 7, which has been added 125 pl acetone and 125 µl ethanol. The BR buffer was 40 mM phosphoric acid, 40 mM acetic acid, 40 mM boric acid adjusted with 0.2N NaOH. Samples of typically 20 µl of enzyme stock solution (dependent on the concentration) was added to this mixture and the resulting mixture was incubated at 37°C for 24 hours in a thermo mixer after which break-down of chorsulfuron could be monitored by Thin Layer Chromatography (TLC) employing Si-60 plates eluted with a solvent of toluene, methylenechloride and ethanol in a ratio of 5:4:1 (Rf values: chlorsulfuron 0.37, methylsyringate 0.51).

Urease obtained from Jack Beans (Type VI) obtained from Sigma (art. No. U 2125) is used to degrade the Chlorsulfuron (1-(2-chlorophenylsulfonyl)-3-(4-methoxy-6-methyl-1,3,5-triazin-2-yl)urea).

The invention is illustrated by the following examples, which in no way is intended to be limiting to the scope of the invention.

### EXAMPLES

### Example 1. Degradation of Chlorsulfuron using Urease

1 mg Urease (corresponding to approx. 125 Urease units) is added to a solution of 100 mg chlorosulfuron in 500 ml phosphate buffer (0.1M, pH 7.0). The solution is stirred on a magnetic stirrer and samples are drawn at regular time intervals, e.g. 1-5 minutes for 30 minutes and analyzed by HPLC to monitor the sample content of chlorosulfuron. A control sample prepared without the addition of Urease chlorosulfuron is also analyzed by HPLC for comparison and relative measurement of the degree of the enzymatic degradation of the chlorosulfuron.

## Claims

1. A method for reducing the amino acid biosynthesis inhibiting effect of a sulfonyl-urea based compound of the general formula: 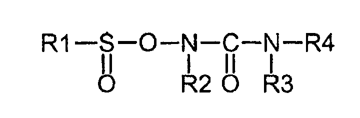 comprising contacting in an aqueous solution said sulfonyl-urea based compound with an isolated enzyme.

2. The method according to claim 1, further **characterized in that** the enzyme is a hydrolase (EC 3.-.-.-).

3. The method according to claim 2, wherein said hydrolase is selected from the group consisting of esterase (EC 3.1.-.-), peptidase (EC 3.4.-.-), hydrolase acting on carbon-nitrogen bonds other than peptide bonds (EC 3.5.-.-) and sulfohydrolase (EC 3.10.-.-).

4. The method according to claim 3, wherein said esterase is selected from the group consisting of carboxylic ester hydrolase (EC 3.1.1.-) and sulphatase (EC 3.1.6.-)

5. The method according to claim 4, wherein said carboxylic ester hydrolase is selected from the group consisting of carboxyl esterase (EC 3.1.1.1) and lipase (EC 3.1.1.3)

6. The method according to claim 3, wherein said hydrolase acting on carbon-nitrogen bonds other than peptide bond is selected from the group consisting of amidase (EC 3.5.1.4) and urease (EC 3.5.1.5)

7. The method according to claim 6, wherein said urease is obtained from Jack Beans.

8. The method according to claim 1, wherein R1 and R4 of said general formula for the sulfonyl-urea based compound is selected from the group of residues consisting of C₁₋₁₈-alkyl, monocyclic aromatic, dicyclic aromatic, polycyclic aromatic and heteroaromatic and R2 and R3 is selected from the group consisting of hydrogen, methyl, ethyl and butyl.

9. The method according to claim 8, wherein R1 is a mono-aromatic group and R4 is a heteroaromatic group.

10. The method according to claim 9, wherein said mono-aromatic group is a phenyl group and said heteroaromatic group is selected from the group consisting of pyridine, pyrazine, pyridazine, pyrimidine and triazine.

11. The method according to claim 10, wherein the sulfonyl-urea based compound is of the formula:

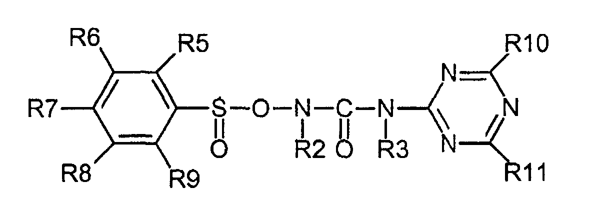

12. The method according to claims 8-11, wherein said R1 and R4 substituents further is substituted with substituents selected from the group consisting of halogen, sulfo, sulfonato, sulfamino, sulfanyl, amino, amido, nitro, azo, imino, carboxy, cyano, formyl, hydroxy, halocarbonyl, carbamoyl, carbamidoyl, phosphonato, phosphonyl, C₁₋₁₈-alkyl, C₁₋₁₈-alkenyl, C₁₋₁₈-alkynyl, C₁₋₁₈-alkoxy, C₁₋₁₈-oxycarbonyl, C₁₋₁₈-oxoalkyl, C₁₋₁₈-alkyl sulfanyl, C₁₋₁₈-alkyl sulfonyl and C₁₋₁₈-alkyl imino or amino which is substituted with one, two or three C₁₋₁₈-alkyl groups.

13. The method according to claims 8-12, wherein said sulfonyl-urea based compound is selected from the group of compound having the formulas of: 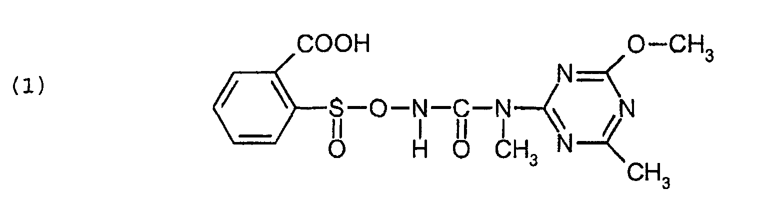 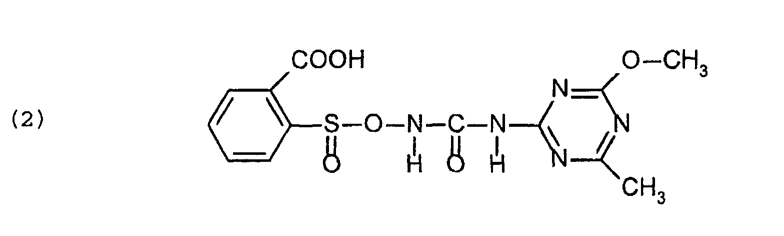 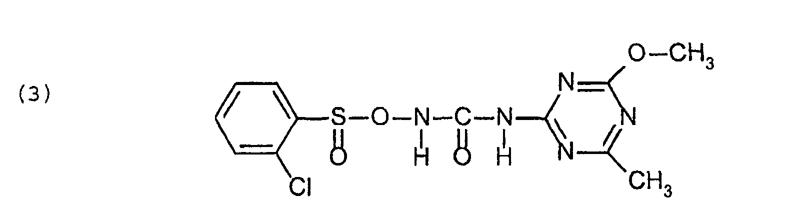 and

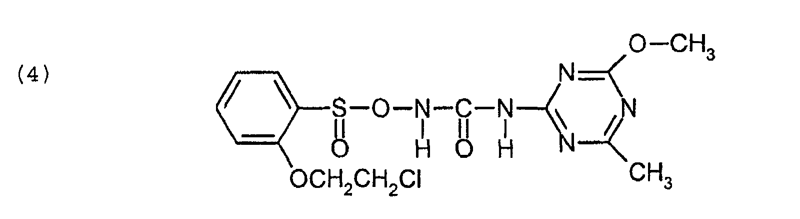

14. The method according to any of the preceding claims, wherein the sulfonyl-urea based compound is present in a spraying device or a waste water.

## Patentansprüche

1. Verfahren zur Reduzierung der Aminosäure-Biosynthese inhibierenden Wirkung einer auf Sulfonylharnstoff basierenden Verbindung der allgemeinen Formel: 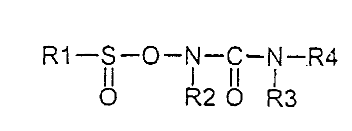 umfassend in Kontakt bringen der Sulfonylharnstoff basierenden Verbindung mit einem isolierten Enzym in einer wässrigen Lösung.

2. Verfahren nach Anspruch 1, weiterhin **dadurch gekennzeichnet, dass** das Enzym eine Hydrolase ist (EC 3.-.-.-).

3. Verfahren nach Anspruch 2, wobei die Hydrolase ausgewählt ist aus der Gruppe bestehend aus Esterase (EC 3.1.-.-), Peptidase (EC 3.4.-.-), Hydrolase, die auf Kohlenstoff-Stickstoffbindungen, die keine Peptidbindungen sind, wirkt (EC 3.5.-.-) und Sulfohydrolase (EC 3.10.-.-).

4. Verfahren nach Anspruch 3, wobei die Esterase ausgewählt ist aus der Gruppe bestehend aus carboxylische Ester-Hydrolase (EC 3.1.1.-) und Sulfatase (EC 3.1.6.-).

5. Verfahren nach Anspruch 4, wobei die Carboxyl-Ester-Hydrolase ausgewählt ist aus der Gruppe bestehend aus Carboxyl-Esterase (EC 3.1.1.1) und Lipase (EC 3.1.1.3).

6. Verfahren nach Anspruch 3, wobei die Hydrolase, die auf Kohlenstoff-Stickstoffbindungen, die keine Peptidbindung ist, wirkt, ausgewählt ist aus der Gruppe bestehend aus Amidase (EC 3.5.1.4) und Urease (EC 3.5.1.5).

7. Verfahren nach Anspruch 6, wobei die Urease aus Jack Bohnen (= Jack Beans) erhalten wird.

8. Verfahren nach Anspruch 1, wobei R1 und R4 der allgemeinen Formel für die Sulfonylharnstoff basierende Verbindung ausgewählt sind aus der Gruppe von Resten bestehend aus C₁₋₁₈-Alkyl, monozyklischem Aromat, dizyklischem Aromat, polyzyklischem Aromat und Heteroaromat und R2 und R3 sind ausgewählt aus der Gruppe bestehend aus Wasserstoff, Methyl, Ethyl und Butyl.

9. Verfahren nach Anspruch 8, wobei R1 eine monoaromatische Gruppe und R4 eine heteroaromatische Gruppe ist.

10. Verfahren nach Anspruch 9, wobei die monoaromatische Gruppe eine Phenylgruppe ist und die heteroaromatische Gruppe ausgewählt ist aus der Gruppe bestehend aus Pyridin, Pyrazin, Pyridazin, Pyrimidin und Triazin.

11. Verfahren nach Anspruch 10, wobei die Sulfonylharnstoff basierende Verbindung die Formel aufweist:

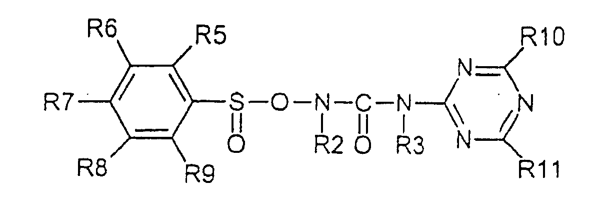

12. Verfahren nach einem der Ansprüche 8 - 11, wobei die R1 und R4 Substituenten weiterhin substituiert sind mit Substituenten ausgewählt aus der Gruppe bestehend aus Halogen-, Sulfo-, Sulfonato-, Sulfamino-, Sulfanyl-, Amino-, Amido-, Nitro-, Azo-, Imino-, Carboxy-, Cyano-, Formyl-, Hydroxy-, Halocarbonyl-, Carbamoyl-, Carbamidoyl-, Phosphonato-, Phosphonyl-, C₁₋₁₈-Alkyl-, C₁₋₁₈-Alkenyl-, C₁₋₁₈-Alkinyl-, C₁₋₁₈-Alkoxy-, C₁₋₁₈-Oxycarbonyl-, C₁-₁₈-Oxoalkyl-, C₁₋₁₈-Alkyl-Sulfanyl-, C₁₋₁₈-Alkyl-Sulfonyl und C₁₋₁₈-Alkyl-Imino oder -Amino, die mit eins, zwei oder drei C₁₋₁₈-Alkylgruppen substituiert sind.

13. Verfahren nach einem der Ansprüche 8 - 12, wobei die Sulfonylharnstoff basierende Verbindung ausgewählt ist aus der Gruppe von Verbindungen mit den Formeln: 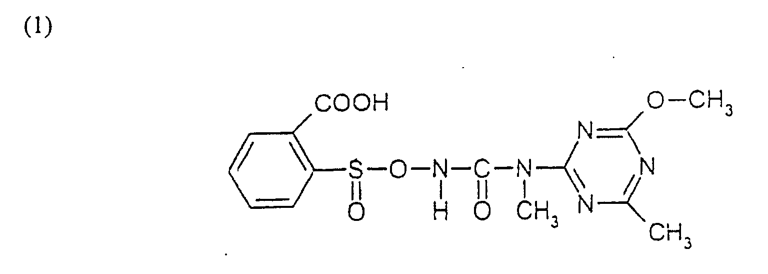 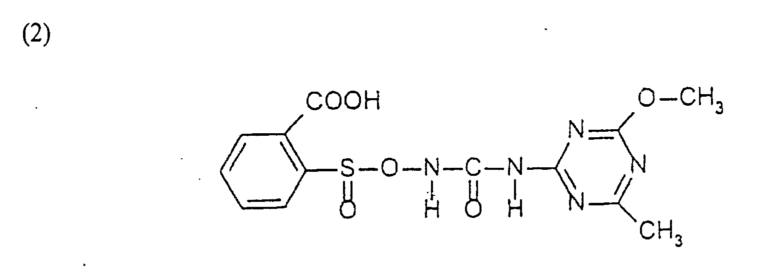 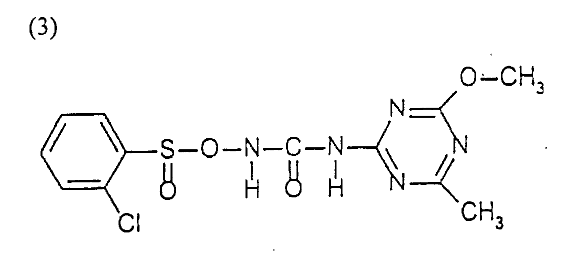 und

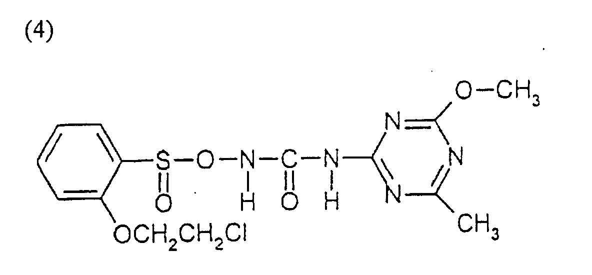

14. Verfahren nach einem der vorhergehenden Ansprüche, wobei die Sulfonylharnstoff basierende Verbindung in einer Sprühvorrichtung oder einem Abwasser vorliegt.

## Revendications

1. Procédé de réduction de l'effet inhibiteur de la biosynthèse des acides aminés que présente un composé à base de sulfonylurée de formule générale 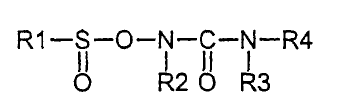 qui comprend la mise en contact en solution aqueuse, avec une enzyme isolée, dudit composé à base de sulfonylurée.

2. Procédé selon la revendication 1, **caractérisé en outre en ce que** l'enzyme est une hydrolase (EC 3.-.-.-).

3. Procédé selon la revendication 2, dans lequel ladite hydrolase est choisie dans l'ensemble comprenant les estérases (EC 3.1.-.-), les peptidases (EC 3.4.-.-), les hydrolases agissant sur les liaisons carbone-azote autres que les liaisons peptidiques (EC 3.5.-.-) et les sulfohydrolases (EC 3.10.-.-).

4. Procédé selon la revendication 3, dans lequel ladite estérase est choisie dans l'ensemble comprenant les carboxylate-hydrolases (EC 3.1.1.-) et les sulfatases (EC 3.1.6.-).

5. Procédé selon la revendication 4, dans lequel ladite carboxylate-hydrolase est choisie dans l'ensemble comprenant les carboxylestérases (EC 3.1.1.1) et les lipases (EC 3.1.1.3).

6. Procédé selon la revendication 3, dans lequel ladite hydrolase agissant sur les liaisons carbone-azote autres que les liaisons peptidiques est choisie dans l'ensemble comprenant les amidases (EC 3.5.1.4) et les uréases (EC 3.5.1.5).

7. Procédé selon la revendication 6, dans lequel ladite uréase est obtenue à partir de haricot sabre.

8. Procédé selon la revendication 1, dans lequel R1 et R4, dans ladite formule générale du composé à base de sulfonylurée, sont choisis dans l'ensemble de résidus comprenant les groupes alkyle en C₁₋₁₈, aromatiques monocycliques, aromatiques dicycliques, aromatiques polycycliques et hétéroaromatiques, et R2 et R3 sont choisis dans l'ensemble comprenant l'hydrogène et les groupes méthyle, éthyle et butyle.

9. Procédé selon la revendication 8, dans lequel R1 est un groupe monoaromatique et R4 est un groupe hétéroaromatique.

10. Procédé selon la revendication 9, dans lequel ledit groupe monoaromatique est un groupe phényle, et ledit groupe hétéroaromatique est choisi dans l'ensemble comprenant la pyridine, la pyrazine, la pyridazine, la pyrimidine et la triazine.

11. Procédé selon la revendication 10, dans lequel le composé à base de sulfonylurée a la formule :

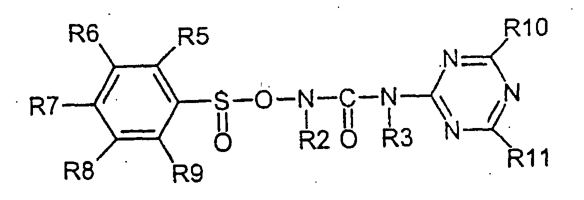

12. Procédé selon les revendications 8 à 11, dans lequel lesdits substituants R1 et R4 sont en outre substitués par des substituants choisis dans l'ensemble comprenant les groupes halogéno, sulfo, sulfonato, sulfamino, sulfanyle, amino, amido, nitro, azo, imino, carboxy, cyano, formyle, hydroxy, halogénocarbonyle, carbamoyle, carbamidoyle, phosphonato, phosphonyle, alkyle en C₁₋₁₈, alcényle en C₁₋₁₈, alcynyle en C₁₋₁₈, alcoxy en C₁₋₁₈, oxycarbonyle en C₁₋₁₈, oxoalkyle en C₁₋₁₈, alkylsulfanyle en C₁₋₁₈, alkylsulfonyle en C₁₋₁₈ et alkylimino en C₁₋₁₈ ou amino, qui est substitué par un, deux ou trois groupes alkyle en C₁₋₁₈.

13. Procédé selon les revendications 8 à 12, dans lequel ledit composé à base de sulfonylurée est choisi dans l'ensemble de composés ayant les formules suivantes : 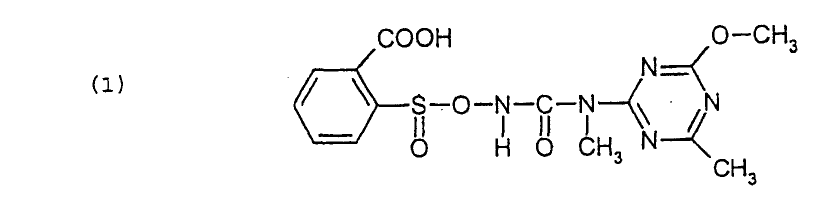 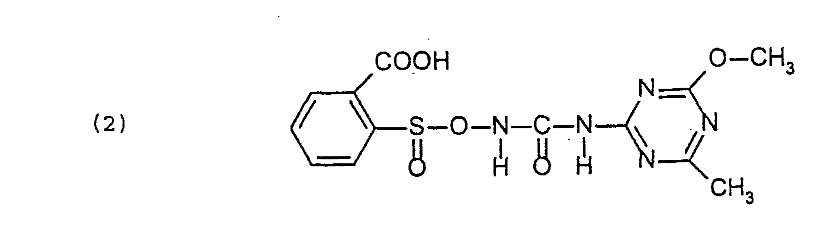 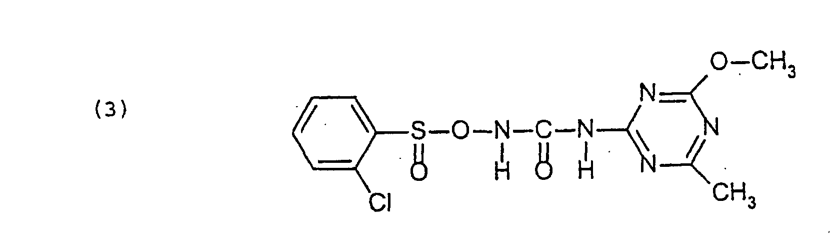 et

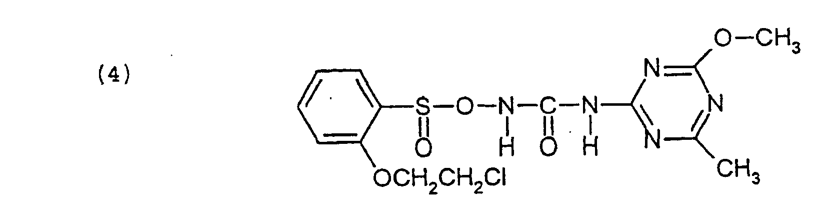

14. Procédé selon l'une quelconque des revendications précédentes, dans lequel le composé à base de sulfonylurée est présent dans un dispositif de pulvérisation ou dans des eaux usées.
